# EUROPEAN PATENT APPLICATION

(11) **EP 4 293 969 A1**
(43) Date of publication of application: **20.12.2023**
(21) Application number: 22752315.6
(22) Date of filing: 10.02.2022
(51) Int. Cl.: H04L 27/26, H04L 5/00

(54) **METHOD AND APPARATUS FOR PROCESSING DATA SENDING AND RECEIVING, AND DEVICE**

(30) Priority: 10.02.2021 CN 202110185275
(71) Applicant: Vivo Mobile Communication Co., Ltd., Dongguan, Guangdong 523863 (CN)
(72) Inventor: SUN, Bule, Dongguan, Guangdong 523863 (CN)
(74) Representative: Murgitroyd & Company
(86) International application number: PCT/CN2022/075763
(87) International publication number: WO 2022/171155

(57) **Abstract**

The present application relates to the technical field of communications, and discloses a method and apparatus for processing data sending and receiving, and a device. The method includes: mapping data on a first resource grid to data on a second resource grid according to a first mapping rule; and performing zero padding on a position of the second resource grid to which no data is mapped. The data on the first resource grid being output data of inverse symplectic fast Fourier transform; the data on the second resource grid being input data of inverse fast Fourier transform; and the first mapping rule comprises a global mapping or a split mapping or an interval mapping.

## Description

### CROSS-REFERENCE TO RELATED APPLICATION

This application claims priority to Chinese Patent Application No. 202110185275.7 filed in China on February 10, 2021, which is incorporated herein by reference in its entirety.

### TECHNICAL FIELD

This application belongs to the technical field of communications and particularly relates to a method and apparatus for processing data sending and receiving, and a device.

### BACKGROUND

An orthogonal time frequency space (Orthogonal Time Frequency Space, OTFS) modulation technology transforms a time-variant multi-path channel into a (within a certain duration) time-invariant two-dimensional delay Doppler domain channel, so that a channel delay Doppler response characteristic caused by geometrical characteristics of relative positions of a reflector between transceivers in a wireless link is directly embodied. In this way, OTFS eliminates difficulty of analyzing and tracking time-varying fading characteristics through conventional time and frequency domains and analyzes and extracts all diversity characteristics of a time-frequency domain channel through a delay Doppler domain. In an actual system, since the quantity of channel delay paths and Doppler frequency shift is far smaller than the quantity of time domain and frequency domain responses of a channel, a channel impulse response matrix represented by the delay Doppler domain has sparsity. A sparse channel matrix is analyzed in the delay Doppler domain by using the OTFS technology, so that packaging of a reference signal may be more compact and flexible.

However, current OTFS study is carried out based on an ideal condition that a dimension of inverse symplectic fast Fourier transform (Inverse Symplectic Fast Fourier Transform, ISFFT) and a dimension of inverse fast Fourier transform (Inverse Fast Fourier Transform, IFFT) of a sending end are equivalent. However, the dimension of ISFFT needs to be adjusted according to an actual transmission content, for example, smaller ISFFT is needed for a short data packet, and there is no need to sacrifice scheduling granularity only for being aligned with the dimension of IFFT. Therefore, a problem of resource mapping when the dimension of ISFFT and the dimension of IFFT of the sending end are not equivalent may occur in the OTFS system. Similarly, the problem of resource mapping when a dimension of symplectic fast Fourier transform (Symplectic Fast Fourier Transform, SFFT) and a dimension of fast Fourier transform (Fast Fourier Transform, FFT) are not equivalent may also exist in a receiving end of the OTFS.

### SUMMARY

Objectives of embodiments of this application are to provide a method and apparatus for processing data sending and receiving, and a device, which can solve the problem of resource mapping when a dimension of ISFFT and a dimension of IFFT of a sending end of OTFS are not equivalent and solve the problem of resource mapping when a dimension of SFFT and a dimension of FFT of a receiving end of OTFS are not equivalent.

To solve the foregoing technical problems, this application is implemented as follows.

In a first aspect, an embodiment of this application provides a method for processing data sending, including:
mapping data on a first resource grid to data on a second resource grid according to a first mapping rule; and
performing zero padding on a position of the second resource grid to which no data is mapped;
the data on the first resource grid being output data of inverse symplectic fast Fourier transform;
the data on the second resource grid being input data of inverse fast Fourier transform; and
the first mapping rule including a global mapping or a split mapping or an interval mapping.

In a second aspect, an embodiment of this application provides a method for processing data receiving, including:
mapping data on a third resource grid to data on a fourth resource grid according to a second mapping rule;
the data on the third resource grid being output data of fast Fourier transform; and
the data on the fourth resource grid being input data of symplectic fast Fourier transform.

In a third aspect, an embodiment of this application provides an apparatus for processing data sending, including:
a first processing module, configured to map data on a first resource grid to data on a second resource grid according to a first mapping rule; and
a second processing module, configured to perform zero padding on a position of the second resource grid to which no data is mapped;
the data on the first resource grid being output data of inverse symplectic fast Fourier transform;
the data on the second resource grid being input data of inverse fast Fourier transform; and
the first mapping rule including a global mapping or a split mapping or an interval mapping.

In a fourth aspect, an embodiment of this application provides an apparatus for processing data receiving, including:
a third processing module, configured to map data on a third resource grid to data on a fourth resource grid according to a second mapping rule;
the data on the third resource grid being output data of fast Fourier transform; and
the data on the fourth resource grid being input data of symplectic fast Fourier transform.

In a fifth aspect, an embodiment of this application further provides an electronic device, including: a processor, a memory, and a program or an instruction stored in the memory and executable on the processor, where when the program or the instruction is executed by the processor, the steps of the method as described in the first aspect or the steps of the method as described in the second aspect are implemented.

In a sixth aspect, an embodiment of this application further provides a readable storage medium, storing a program or an instruction, where when the program or the instruction is executed by a processor, the steps of the methods as described in the first aspect or the steps of the method as described in the second aspect are implemented.

In a seventh aspect, an embodiment of this application provides a chip, including a processor and a communication interface, the communication interface being coupled to the processor, and the processor being configured to execute a program or an instruction to implement the method as described in the first aspect or the method as described in the second aspect.

In an eighth aspect, an embodiment of this application provides a program product, stored in a non-volatile storage medium, the program product being executed by at least one processor to implement the method as described in the first aspect or the method as described in the second aspect.

In a ninth aspect, an embodiment of this application provides a communication device, configured to execute the method as described in the first aspect or the method as described in the second aspect.

Accordingly, in the embodiments of this application, the output data of the inverse symplectic fast Fourier transform on the first resource grid is mapped onto the second resource grid according to the first mapping rule to serve as the input data of the inverse fast Fourier transform, zero padding is further performed on the position of the second resource grid to which no data is mapped, and thus resource mapping may be performed based on the first mapping rule in a case that the dimension of ISFFT and the dimension of IFFT are not equivalent.

### BRIEF DESCRIPTION OF THE DRAWINGS

FIG. 1 is a block diagram of a wireless communication system.
FIG. 2 is a schematic flowchart of a method for processing data sending in an embodiment of this application.
FIG. 3 is a first schematic diagram of data mapping in an embodiment of this application.
FIG. 4 is a second schematic diagram of data mapping in an embodiment of this application.
FIG. 5 is a third schematic diagram of data mapping in an embodiment of this application.
FIG. 6 is a fourth schematic diagram of data mapping in an embodiment of this application.
FIG. 7 is a fifth schematic diagram of data mapping in an embodiment of this application.
FIG. 8 is a sixth schematic diagram of data mapping in an embodiment of this application.
FIG. 9 is a seventh schematic diagram of data mapping in an embodiment of this application.
FIG. 10 is an eighth schematic diagram of data mapping in an embodiment of this application.
FIG. 11 is a ninth schematic diagram of data mapping in an embodiment of this application.
FIG. 12 is a tenth schematic diagram of data mapping in an embodiment of this application.
FIG. 13 is an eleventh schematic diagram of data mapping in an embodiment of this application.
FIG. 14 is a structural diagram of an apparatus for processing data sending in an embodiment of this application.
FIG. 15 is a schematic flowchart of a method for processing data receiving in an embodiment of this application.
FIG. 16 is a structural diagram of an apparatus for processing data receiving in an embodiment of this application.
FIG. 17 is a structural diagram of a communication device in an embodiment of this application.
FIG. 18 is a structural diagram of a terminal in an embodiment of this application.

### DETAILED DESCRIPTION

The technical solutions in embodiments of this application are clearly and completely described below with reference to the accompanying drawings in the embodiments of this application. Apparently, the described embodiments are merely some rather than all of the embodiments of this application. All other embodiments obtained by a person of ordinary skill in the art based on the embodiments of this application without making creative efforts shall fall within the protection scope of this application.

In the specification and claims of this application, terms such as "first" and "second" are used to distinguish similar objects, but are not used to describe a specific sequence or precedence order. It is to be understood that data used in this way is interchangeable where appropriate so that the embodiments of this application can be implemented in an order other than those illustrated or described here. In addition, "and/or" used in the specification and the claims represents at least one of connected objects, and a character "/" generally represents an "or" relationship between associated objects before and after the character.

It is worth noting that the technologies described in the embodiments of this application are not limited to a long term evolution (Long Term Evolution, LTE)/LTE-advanced (LTE-Advanced, LTE-A) system, and may further be applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single carrier frequency division multiple access (Single Carrier Frequency Division Multiple Access, SC-FDMA), and other systems. The terms "system" and "network" in the embodiments of this application are frequently used interchangeably, and the described technologies can be applied to the systems and radio technologies mentioned above, and can also be applied to other systems and radio technologies. However, the following description describes a new radio (New Radio, NR) system for the purpose of an example, and an NR term is used in most of the following descriptions though these technologies may also be applied to an application other than an NR system application, such as a 6-th generation (6-th Generation, 6G) communication system.

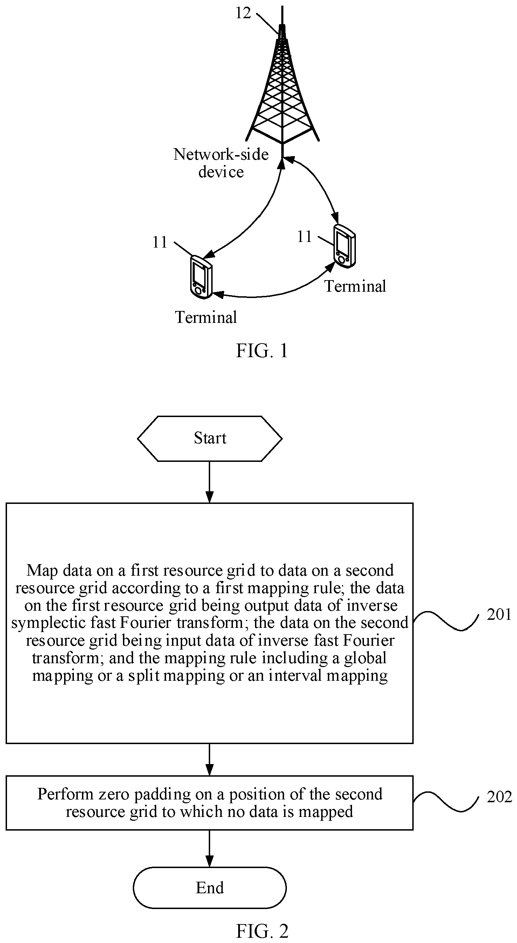

FIG. 1 shows a block diagram of a wireless communication system to which the embodiments of this application are applicable. The wireless communication system includes a terminal 11 and a network-side device 12. The terminal 11 may also be called a terminal device or user equipment (User Equipment, UE). The terminal 11 may be a mobile phone, a tablet personal computer (Tablet Personal Computer, TPC), and a laptop computer (Laptop Computer, LC), or called a notebook computer, a personal digital assistant (Personal Digital Assistant, PDA), a palmtop computer, a netbook, an ultra-mobile personal computer (Ultra-Mobile Personal Computer, UMPC), a mobile Internet device (Mobile Internet Device, MID), a wearable device (Wearable Device), or vehicle user equipment (Vehicle User Equipment, VLTE), pedestrian user equipment (Pedestrian User Equipment, PUE) and other terminal-side devices. The wearable device includes: a wristband, an ear phone, glasses and the like. It needs to be noted that: a specific type of the terminal 11 is not limited in the embodiments of this application. The network-side device 12 may be a base station or a core network. The base station may be called NodeB, evolved NodeB, an access point, a base transceiver station (Base Transceiver Station, BTS), a radio base station, a radio transceiver, a basic service set (Basic Service Set, BSS), an extended service set (Extended Service Set, ESS), NodeB, evolved NodeB (eNB), home NodeB, home evolved NodeB, a wireless local area network (Wireless Local Area Network, WLAN) access point, a WiFi node, a transmitting receiving point (Transmitting Receiving Point, TRP) or a certain proper one of other terms in the field. The base station is not limited to a specific technical term as long as the same technical effects are achieved. It needs to be noted that only a base station in the NR system is used as an example in the embodiments of this application, but a specific type of the base station is not limited.

A method for processing data sending provided by an embodiment of this application is described in detail below through specific embodiments and application scenarios thereof with reference to the accompanying drawings.

The method in the embodiment of this application is applied to user equipment. The user equipment may refer to an access terminal, a user unit, a user station, a mobile station, a mobile table, a remote station, a remote terminal, a mobile device, a user terminal, a terminal, a wireless communication device, a user agent or a user apparatus. The terminal device may also be a cell phone, a cordless telephone, a session initiation protocol (Session Initiation Protocol, SIP) phone, a wireless local loop (Wireless Local Loop, WLL) station, a PDA, a hand-held device with a wireless communication function, a computing device, or other processing devices connected to a radio modem, a vehicle-mounted device and a wearable device.

As shown in FIG. 2, a method for processing data sending in an embodiment of this application includes:
Step 201: data on a first resource grid is mapped to data on a second resource grid according to a first mapping rule;
the data on the first resource grid being output data of inverse symplectic fast Fourier transform;
the data on the second resource grid being input data of inverse fast Fourier transform; and
the first mapping rule including a global mapping or a split mapping or an interval mapping.

In this step, a sending-end device of the data maps the output data of the inverse symplectic fast Fourier transform onto the second resource grid according to the first mapping rule.

Step 202, zero padding is performed on a position of the second resource grid to which no data is mapped.

Here, after data mapping in step 201, zero padding may be performed on the position of the second resource grid to which no data is mapped.

Accordingly, by using the method in the embodiment of this application, through the foregoing steps 201 and 202, the sending-end device of the data can map the output data of the inverse symplectic fast Fourier transform on the first resource grid onto the second resource grid according to the first mapping rule to serve as the input data of the inverse fast Fourier transform, and further perform zero padding on the position of the second resource grid to which no data is mapped, and thus resource mapping may be performed based on the first mapping rule in a case that a dimension of ISFFT and a dimension of IFFT are not equivalent.

Especially, in OTFS, by applying the method in this embodiment of this application, the sending-end device of the data may complete mapping from a signal obtained after ISFFT to an IFFT input signal.

Optionally, the first resource grid is a grid obtained by performing inverse symplectic fast Fourier transform on a resource grid of a delay Doppler domain.

A Doppler dimension of the resource grid of the delay Doppler domain is N, and a delay dimension thereof is M.

The second resource grid is a time-frequency domain resource grid.

A time dimension of the time-frequency domain resource grid is N, and a frequency dimension thereof is L.

N, M and L are integers greater than or equal to 1, and L is greater than or equal to M.

In other words, the first resource grid includes N rows and M columns, and the second resource grid includes N rows and L columns. In step 201, namely, non-equivalent mapping from M columns (corresponding to the delay dimension) to L columns (IFFT dimension), a signal of an N×M dimension obtained after ISFFT is mapped into N L-length signals for N-time L-point IFFT sending.

Besides, given that a signal transmitter and receiver in an LTE and NR communication system generally adopt a zero intermediate frequency solution or a primary variable frequency solution to implement transformation between a base band and a radio frequency, a zero intermediate frequency and a primary variable frequency will cause a large direct current noise at a signal carrier frequency during transmitting and receiving, consequently, a signal to noise ratio on the frequencies is quite poor, and a carrier here is called a direct current (Direct Current, DC) subcarrier.

Thus, in this embodiment, in step 201, mapping the data on the first resource grid to the data on the second resource grid includes:
mapping the data on the first resource grid to the data on the second resource grid in a mode of global mapping or split mapping or interval mapping according to a position of the direct current subcarrier on a frequency dimension of the second resource grid in a case that L is greater than M.

Accordingly, based on the position of the DC subcarrier on the frequency dimension of the second resource grid, global mapping or split mapping or interval mapping of the data on the first resource grid onto the second resource grid is performed, and the DC subcarrier remains vacant to further improve transmission performance.

Optionally, the global mapping includes:
mapping the first resource grid to a first area in a mode of global mapping in a case that the quantity of grids on the frequency dimension of the first area is greater than or equal to M.

The first area is obtained by dividing the second resource grid based on the position of the direct current subcarrier on the frequency dimension of the second resource grid.

Here, the second resource grid is divided by the DC subcarrier, and then at least two first areas will be obtained. Specifically, when only one DC subcarrier exists in a transmission sub-band (for example, a DC is generated only in one end of a transceiver, and the DC does not exist generally if the base station uses a non-zero frequency receiver; or though DCs are generated in both transmitting and receiving ends, the DCs of the base station are beyond an effective sub-band of the terminal; or the DCs of both the transmitting end and the receiving end overlap, or the like), the second resource grid is divided by the DC subcarrier into two first areas. When there are two DCs in the transmission sub-band (the DCs are generated in the transceiver, are within the transmission sub-band and do not overlap), the second resource grid is divided by the two DC subcarriers into three first areas.

In order to implement global mapping of the data on the first resource grid, the quantity of grids on the frequency dimension of at least one first area obtained by dividing the second resource grid needs to be greater than or equal to M, so that the data on the first resource grid can be mapped to the at least one first area in a mode of global mapping. Certainly, if there are a plurality of first areas simultaneously needing that the quantity of grids on a frequency dimension of each of them is greater than or equal to M, a first area with the largest quantity of grids on the frequency dimension may be selected among the plurality of first areas to serve as a mapping target area.

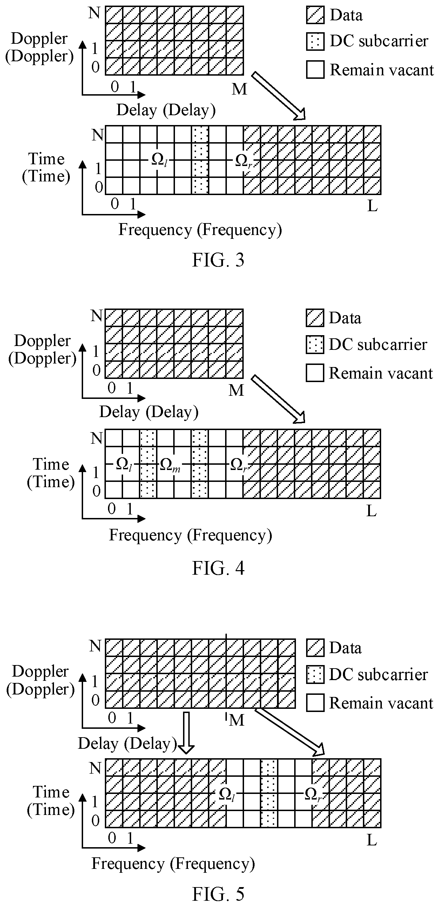

Assuming that only one DC subcarrier exists in the transmission sub-band, an index (index) corresponding to the position of the DC subcarrier on the frequency dimension of the second resource grid is marked as P_{DC}. Index is an integer greater than or equal to 0. In the two first areas obtained by dividing the second resource grid by the DC subcarrier, the first area (a subcarrier area) with index<P_{DC} is marked as *Ωₗ*, and *Ωₗ* contains *L_{DC_l}* subcarriers. The first area with index>P_{DC} is marked as *Ωᵣ*, and *Ωᵣ* contains *L_{DC_r}* subcarriers, *L = L_{DC_l}* + *L_{DC_r}* + 1. Thus, if M is smaller than or equal to max (*L_{DC_l}*, *L_{DC_r}*), the sending-end device maps the data on the first resource grid onto any subcarrier position area with the quantity of subcarriers in *Ωₗ* or *Ωᵣ* being greater than M in a mode of global mapping, and zero padding is performed on a subcarrier position to which no data is mapped. For example, as shown in FIG. 3, P_{DC}=5, *L_{DC_l}*<M<*L_{DC_r}*, the data on the first resource grid is mapped into *Ωᵣ* in a mode of global mapping.

In a case that two DC subcarriers exist in the transmission sub-band, indexes corresponding to positions of the two DC subcarriers on the frequency dimension of the second resource grid are marked as P_{DC1} and P_{DC2}, and P_{DC1}<P_{DC2}. In three first areas obtained by dividing the second resource grid by the two DC subcarriers, the first area with index< P_{DC1} is marked as *Ωₗ*, and *Ωₗ* contains *L_{DC_l}* subcarriers.The first area with P_{DC1}<index< P_{DC2} is marked as *Ωₘ*, and *Ωₘ* contains *L_{DC_m}* subcarriers.The first area with index>P_{DC2} is marked as *Ωᵣ,* and *Ωᵣ* contains *L_{DC_r}* subcarriers, *L = L_{DC_l}* + *L_{DC_m}* + *L_{DC_r}* + 2.Thus, if M is smaller than or equal to max (*L_{DC_l}, L_{DC_m}, L_{DC_r}*), the sending-end device maps the data on the first resource grid onto any subcarrier position area with the quantity of subcarriers in *Ωₗ*, *Ωₘ* and *Ωᵣ* being greater than M in a mode of global mapping, and zero padding is performed on a subcarrier position to which no data is mapped. For example, as shown in FIG. 4, P_{DC1}=2, P_{DC2}=5, *L_{DC_l}*<M*, L_{DC_m}*<M and M <*L_{DC_r},* the data on the first resource grid is mapped into *Ωᵣ* in a mode of global mapping.

Optionally, in this embodiment, the split mapping includes:
splitting the data on the first resource grid into K parts and mapping the K parts to a plurality of second areas respectively in a case that the quantity of grids on a frequency dimension of each second area is smaller than M.

K is greater than or equal to 2.

The second areas are obtained by dividing the second resource grid based on a position of the direct current subcarrier on the frequency dimension of the second resource grid.

Here, the second resource grid is divided by the DC subcarrier, and then at least two second areas will be obtained. Specifically, when only one DC subcarrier exists in the transmission sub-band (for example, the DC is generated only in one end of the transceiver, and the DC does not exist generally if the base station uses the non-zero frequency receiver; or though DCs are generated in both the transmitting and receiving ends, the DCs of the base station are beyond the effective sub-band of the terminal; or the DCs of both the transmitting end and the receiving end overlap, or the like), the second resource grid is divided by the DC subcarrier into two second areas. When there are two DCs in the transmission sub-band (the DCs are generated in the transceiver, are within the transmission sub-band and do not overlap), the second resource grid is divided by the two DC subcarriers into three second areas. However, if the quantity of grids on the frequency dimension of each second area is smaller than M, which does not adapt to global mapping, the data on the first resource grid may be split into K (K is greater than or equal to 2) parts and then are mapped to the plurality of second areas respectively. K is smaller than or equal to the quantity of the second areas obtained by dividing the second resource grid.

Splitting of the data on the first resource grid is performed according to the quantity of grids on the frequency dimension of each second area. Optionally, preferentially, a first part is split based on a second area with the largest quantity of grids on the frequency dimension among all the second areas, whether the rest of data may be totally mapped into one of the rest of the second areas is judged, and if yes, splitting is not performed any more; and if not, a second part is split based on a second area with the largest quantity of grids on the frequency dimension among the rest of the second areas till all the data is mapped, so that a value of K may be reduced as much as possible.

In the above case that only one DC subcarrier exists in the transmission sub-band, in a case that M is greater than max (*L_{DC_l}, L_{DC_r}*), the sending-end device may split the data on the first resource grid into two parts, one part is mapped into *Ωₗ*, or the other part is mapped into *Ωᵣ*, and zero padding is performed on the subcarrier position to which no data is mapped. For example, as shown in FIG. 5, P_{DC}=9, M<*L_{DC_l},* and M *<L_{DC_r},* the data on the first resource grid is split into two parts, which are mapped into *Ωₗ* and *Ωᵣ* respectively.

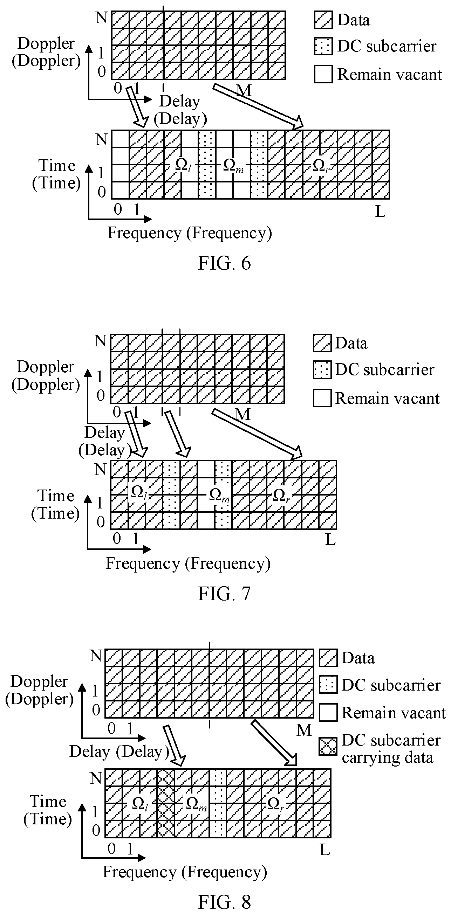

In the above case that there are two DC subcarriers in the transmission sub-band, in a case that M is greater than max (*L_{DC_l}*, *L_{DC_m}*, *L_{DC_r}*), and M is smaller than or equal to L-2, the sending-end device splits the data on the first resource grid into a plurality of (two or three) parts and maps them to the plurality of second areas, and zero padding is performed on the subcarrier position to which no data is mapped. For example, as shown in FIG. 6, P_{DC1}=5, P_{DC2}=8, *L_{DC_l}*<M, *L_{DC_m}*<M, and *L_{DC_r}*<M, the data on the first resource grid is split into a part 1 (containing S1 subcarriers) and a part 2 (containing S2 subcarriers), as S1=*L_{DC_r}*, *L*_{*DC_*m}<S2< *L_{DC_l},* the part 1 may be mapped into *Ωᵣ*, and the part 2 may be mapped into *Ωₗ*. As shown in FIG. 7, P_{DC1}=3, P_{DC2}=6, *L_{DC_l}*<M, *L_{DC_m}*<M, and *L_{DC_r}*<M, the data on the first resource grid is split into a part 1 (containing S1 subcarriers), a part 2 (containing S2 subcarriers) and a part 3 (containing S3 subcarriers), as S1=*L_{DC_r},* S2=*L_{DC_l},* S3<*L_{DC_m},* the part 1 may be mapped into *Ωᵣ,* the part 2 may be mapped into *Ωₗ*, and the part 3 may be mapped into *Ωₘ*.

Besides, during split mapping, the second area may be obtained by dividing the second resource grid based on a position of at least one direct current subcarrier on the frequency dimension of the second resource grid. Thus, in a case that there are the plurality of DC subcarriers, only some DC subcarriers are used as dividing lines for dividing of the second area, the DC subcarriers selected as the dividing lines do not carry data, and the rest of the DC subcarriers need to carry data. In a case that there are two DC subcarriers in the transmission sub-band, if M=L-1, a position of one DC subcarrier needs to be occupied for mapping data, thus, at the moment, two second areas may be obtained by dividing the second resource grid with the position of one DC subcarrier as the dividing line. The data on the first resource grid is split into two parts and mapped to a left area and a right area of the DC subcarrier used as the dividing line. Here, as shown in FIG. 8, P_{DC1}=3, P_{DC2}=6, *L_{DC_l}*<M, *L_{DC_m}*<M, *L_{DC_r}*<M, and M=L-1, the data on the first resource grid is split into the part 1 (containing S1 subcarriers) and the part 2 (containing S2 subcarriers), as S1=*L_{DC_r},* S2=*L_{DC_l}*+*L_{DC_m}*+1, the part 1 may be mapped into *Ωᵣ,* the part 2 may be mapped into *Ωₗ* and *Ωₘ*, and a DC subcarrier position corresponding to P_{DC1}.

Optionally, in this embodiment, the interval mapping includes:
determining a start position of the interval mapping on the frequency dimension of the second resource grid based on a mapping interval and the position of the direct current subcarrier on the frequency dimension of the second resource grid; and
mapping the data on the first resource grid to the data on the second resource grid at equal intervals from the start position.

Here, the mapping interval is a pre-set or pre-defined parameter. Thus, in a mapping process, mapping the data on the first resource grid to the data on the second resource grid at equal intervals is implemented jointly by combining the mapping interval and the position of the DC subcarrier on the frequency dimension of the second resource grid.

Optionally, determining the start position of the interval mapping on the frequency dimension of the second resource grid based on the mapping interval and the position of the direct current subcarrier on the frequency dimension of the second resource grid includes:
using a position corresponding to a non-k index on the frequency dimension of the second resource grid as the start position in a case that the quantity of direct current subcarriers is 1.

K=mod (P_{DC}, S), S is the mapping interval, P_{DC} is an index corresponding to the position of the direct current subcarrier on the frequency dimension of the second resource grid, and mod() is a remainder function.

Thus, through k=mod (P_{DC}, S), after a value of k is obtained through calculation, the position corresponding to the non-k index on the frequency dimension of the second resource grid may be selected as the start position, and starting with the start position, the data on the first resource grid is mapped to the data on the second resource grid at equal intervals.

Preferably, the start position is the position of the non-k index on the frequency dimension of the second resource grid.

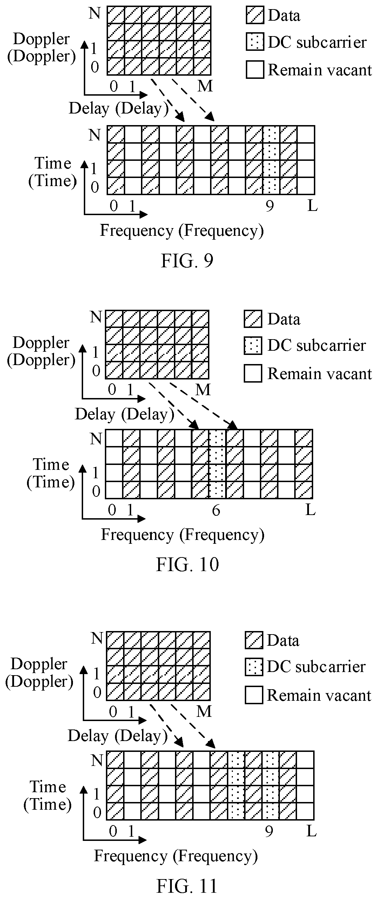

As shown in FIG. 9, in a case that P_{DC}=9, S=2, mod (P_{DC}, S)=1, so index=0 may be used as the start position. As shown in FIG. 10, in a case that P_{DC}=6, S=2, mod (P_{DC}, S)=0, so index=1 may be used as the start position. Zero padding is performed on the subcarrier position to which no data is mapped.

Optionally, determining the start position of the interval mapping on the frequency dimension of the second resource grid based on the mapping interval and the position of the direct current subcarrier on the frequency dimension of the second resource grid includes:
using a position corresponding to a non-n index on the frequency dimension of the second resource grid as the start position in a case that the quantity of direct current subcarriers is 2, and mod (P_{DC1}, S)= mod (P_{DC2}, S).

n=mod (P_{DC1}, S), S is the mapping interval, P_{DC1} is an index corresponding to a position of a first direct current subcarrier on the frequency dimension of the second resource grid, P_{DC2} is an index corresponding to a position of a second direct current subcarrier on the frequency dimension of the second resource grid, and mod() is a remainder function.

Thus, through n=mod (P_{DC1}, S)= mod (P_{DC2}, S), after a value of n is obtained through calculation, the position corresponding to the non-n index on the frequency dimension of the second resource grid may be selected as the start position, and starting with the start position, the data on the first resource grid is mapped to the data on the second resource grid at equal intervals.

Preferably, the start position is the position of the non-n index on the frequency dimension of the second resource grid.

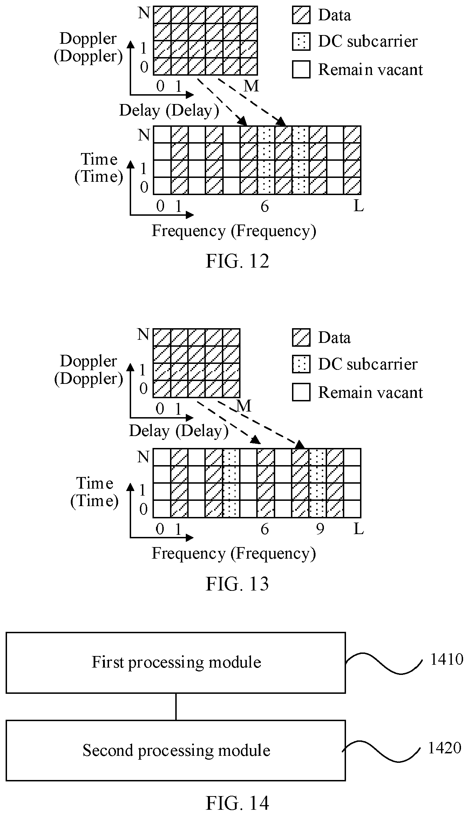

As shown in FIG. 11, in a case that P_{DC1}=9, P_{DC2}=9, S=2, mod (P_{DC1}, S)= mod (P_{DC2}, S)=1, so index=0 may be used as the start position. As shown in FIG. 12, in a case that P_{DC1}=6, P_{DC2}=8, S=2, mod (P_{DC1}, S)= mod (P_{DC2}, S)=0, so index=1 may be used as the start position. Zero padding is performed on the subcarrier position to which no data is mapped.

Optionally, determining the start position of the interval mapping on the frequency dimension of the second resource grid based on the mapping interval and the position of the direct current subcarrier on the frequency dimension of the second resource grid includes:
determining a first start position in a third area and a second start position in a fourth area in a case that the quantity of direct current subcarriers is 2, and mod (P_{DC1}, S) and mod (P_{DC2}, S) are unequal.

The first start position is the position corresponding to a non-x index on the frequency dimension of the second resource grid. x=mod (P_{DC1}, S), S is the mapping interval, P_{DC1} is an index corresponding to the position of the first direct current subcarrier on the frequency dimension of the second resource grid, and mod() is a remainder function.

The second start position is a position corresponding to an index meeting a preset condition on the frequency dimension of the second resource grid. The preset condition includes: that the index is greater than or equal to P_{DC1}, and mod (index, S)≠y, where y=mod (P_{DC2}, S), P_{DC2} is an index corresponding to a position of the second direct current subcarrier on the frequency dimension of the second resource grid, and mod() is a remainder function;
the third area is an area with an index being smaller than P_{DC1} on the frequency dimension in the second resource grid; and
the fourth area is an area with an index being greater than P_{DC1} on the frequency dimension in the second resource grid.

Thus, in a case that the quantity of direct current subcarriers is 2, the DC subcarrier with the corresponding smaller index may be used as a boundary, and different start positions are determined on two sides respectively, so that the DC subcarrier remains vacant. P_{DC1}<P_{DC2}.

In the second resource grid, in an area with an index being smaller than P_{DC1}, through x=mod (P_{DC1}, S), a value of x is obtained through calculation, then a position corresponding to the non-x index on the frequency dimension of the second resource grid may be selected as the first start position, and starting with the first start position, the data on the first resource grid is mapped to the data on the second resource grid at equal intervals. Preferably, the first start position is the position of the non-x index on the frequency dimension of the second resource grid.

In the second resource grid, in an area with an index being greater than P_{DC1}, through y=mod (P_{DC2}, S), a value of y is obtained through calculation, then an index meeting the preset condition may be further determined according to the preset condition, that is, index=p (p is greater than or equal to P_{DC1}, and mod (p, S)≠y), and at the moment, the second start position may be a position corresponding to index=p. Thus, starting with the second start position, the data on the first resource grid is mapped to the data on the second resource grid at equal intervals.

As shown in FIG. 13, in a case that P_{DC1}=4, P_{DC2}=9, S=2, mod (P_{DC1}, S)=0, mod (P_{DC2}, S)=1. That is, index=1 is the first start position, and index=6 is the second start position. Zero padding is performed on the subcarrier position to which no data is mapped.

In the above content, it indicates mapping in a case that L is smaller than M, and certainly, L may also be equal to M. Therefore, optionally, in this embodiment, mapping the data on the first resource grid to the data on the second resource grid includes:
the data on the second resource grid is equal to the data on the first resource grid in a case that L is equal to M.

In other words, a sending end maps all M columns of signals obtained after ISFFT to L subcarriers in whole, and at the moment, the DC subcarrier will also carry data.

Besides, in this embodiment, as for which kind of first mapping rule is adopted, optionally, in one aspect, the method further includes:
the sending-end device determines the first mapping rule according to which the data on the first resource grid is mapped to the data on the second resource grid, which includes:
the sending-end device autonomously determines the first mapping rule if the sending-end device is a network device; where autonomous determining may be to autonomously determine the first mapping rule according to a transmission environment (such as a signal to noise ratio and a multi-path environment), a state (such as a moving speed and a moving direction) of the sending-end device and a receiving-end device, and the like; and
the sending-end device determines the first mapping rule by receiving signaling sent by the network device if the sending-end device is a terminal device.

The network device may inform the terminal device of the specific first mapping rule by using signaling such as radio resource control (Radio Resource Control, RRC), a physical downlink control channel (Physical Downlink Control Channel, PDCCH), a media access control control element (Media Access Control Control Element, MAC CE), and a system information block (System Information Block, SIB).

Optionally, in another aspect, the method further includes:
the sending-end device determines the first mapping rule according to which the data on the first resource grid is mapped to the data on the second resource grid, which includes:
the sending-end device determines the mapping rule according to a criterion stipulated by a protocol and a target parameter.

The criterion stipulated by the protocol includes an association relationship between the first mapping rule and the target parameter.

The target parameter includes at least one of the following:
a symplectic fast Fourier transform dimension;
an inverse symplectic fast Fourier transform dimension;
a fast Fourier transform dimension;
an inverse fast Fourier transform dimension;
a parameter of orthogonal time frequency space (OTFS);
the quantity of resource grids of a Doppler domain;
the quantity of resource grids of a delay domain; and
the quantity of resource grids of a delay Doppler domain.

One or more target parameters correspond to one kind of first mapping rule, and after the target parameter is obtained, the corresponding first mapping rule may be found through the criterion stipulated by the protocol, so mapping is completed.

To sum up, the method of this embodiment of this application solves the problem of data mapping when the dimension of ISFFT and the input dimension of IFFT of the sending end in OTFS are not equivalent, and also considers to make the DC subcarrier vacant in the mapping process, so transmission performance may be further improved.

An executive body of the method for processing data sending provided by this embodiment of this application may be an apparatus for processing data sending, or a control module which is in the apparatus for processing data sending and is used for executing and loading the method for processing data sending. In this embodiment of this application, taking the apparatus for processing data sending executing and loading the method for processing data sending as an example, the method for processing data sending provided by this embodiment of this application is described.

As shown in FIG. 14, an apparatus for processing data sending in an embodiment of this application includes:
a first processing module 1410, configured to map data on a first resource grid to data on a second resource grid according to a first mapping rule; and
a second processing module 1420, configured to perform zero padding on a position of the second resource grid to which no data is mapped;
the data on the first resource grid being output data of inverse symplectic fast Fourier transform;
the data on the second resource grid being input data of inverse fast Fourier transform; and
the first mapping rule including a global mapping or a split mapping or an interval mapping.

Optionally, the first resource grid is a grid obtained by performing inverse symplectic fast Fourier transform on a resource grid of a delay Doppler domain.

A Doppler dimension of the resource grid of the delay Doppler domain is N, and a delay dimension thereof is M.

The second resource grid is a time-frequency domain resource grid.

A time dimension of the time-frequency domain resource grid is N, and a frequency dimension thereof is L.

N, M and L are integers greater than or equal to 1, and L is greater than or equal to M.

Optionally, the first processing module includes:
a first processing sub-module, configured to map the data on the first resource grid to the data on the second resource grid in a mode of global mapping or split mapping or interval mapping according to a position of a direct current subcarrier on a frequency dimension of the second resource grid in a case that L is greater than M.

Optionally, the global mapping includes:
mapping the first resource grid to a first area in a mode of global mapping in a case that the quantity of grids on the frequency dimension of the first area is greater than or equal to M.

The first area is obtained by dividing the second resource grid based on the position of the direct current subcarrier on the frequency dimension of the second resource grid.

Optionally, the split mapping includes:
splitting the data on the first resource grid into K parts and mapping the K parts to a plurality of second areas respectively in a case that the quantity of grids on a frequency dimension of each second area is smaller than M.

K is greater than or equal to 2.

The second areas are obtained by dividing the second resource grid based on a position of the direct current subcarrier on the frequency dimension of the second resource grid.

Optionally, the interval mapping includes:
determining a start position of the interval mapping on the frequency dimension of the second resource grid based on a mapping interval and the position of the direct current subcarrier on the frequency dimension of the second resource grid; and
mapping the data on the first resource grid to the data on the second resource grid at equal intervals from the start position.

Optionally, determining the start position of the interval mapping on the frequency dimension of the second resource grid based on the mapping interval and the position of the direct current subcarrier on the frequency dimension of the second resource grid includes:
using a position corresponding to a non-k index on the frequency dimension of the second resource grid as the start position in a case that the quantity of direct current subcarriers is 1.

k=mod (P_{DC}, S), S is the mapping interval, P_{DC} is an index corresponding to the position of the direct current subcarrier on the frequency dimension of the second resource grid, and mod() is a remainder function.

Optionally, determining the start position of the interval mapping on the frequency dimension of the second resource grid based on the mapping interval and the position of the direct current subcarrier on the frequency dimension of the second resource grid includes:
using a position corresponding to a non-n index on the frequency dimension of the second resource grid as the start position in a case that the quantity of direct current subcarriers is 2, and mod (P_{DC1}, S)= mod (P_{DC2}, S).

n=mod (P_{DC1}, S), S is the mapping interval, P_{DC1} is an index corresponding to a position of a first direct current subcarrier on the frequency dimension of the second resource grid, P_{DC2} is an index corresponding to a position of a second direct current subcarrier on the frequency dimension of the second resource grid, and mod() is a remainder function.

Optionally, determining the start position of the interval mapping on the frequency dimension of the second resource grid based on the mapping interval and the position of the direct current subcarrier on the frequency dimension of the second resource grid includes:
determining a first start position in a third area and a second start position in a fourth area in a case that the quantity of direct current subcarriers is 2, and mod (P_{DC1}, S) and mod (P_{DC2}, S) are unequal.

The first start position is a position corresponding to a non-x index on the frequency dimension of the second resource grid. x=mod (P_{DC1}, S), S is the mapping interval, P_{DC1} is an index corresponding to the position of the first direct current subcarrier on the frequency dimension of the second resource grid, and mod() is a remainder function.

The second start position is a position corresponding to an index meeting a preset condition on the frequency dimension of the second resource grid. The preset condition includes: that the index is greater than or equal to P_{DC1}, and mod (index, S)≠y, where y=mod (P_{DC2}, S), P_{DC2} is an index corresponding to a position of the second direct current subcarrier on the frequency dimension of the second resource grid, and mod() is a remainder function;
the third area is an area with an index being smaller than P_{DC1} on the frequency dimension in the second resource grid; and
the fourth area is an area with an index being greater than P_{DC1} on the frequency dimension in the second resource grid.

Optionally, the first processing module includes:
a second processing sub-module, configured to make the data on the second resource grid equal to the data on the first resource grid in a case that L is equal to M.

Optionally, the apparatus further includes:
a first determining module, configured to determine the first mapping rule according to which the data on the first resource grid is mapped to the data on the second resource grid, which includes:
a sending-end device autonomously determines the first mapping rule if the sending-end device is a network device; and
the sending-end device determines the first mapping rule by receiving signaling sent by the network device if the sending-end device is a terminal device.

Optionally, the apparatus further includes:
a second determining module, configured to determine the first mapping rule according to which the data on the first resource grid is mapped to the data on the second resource grid, which includes:
the sending-end device determines the mapping rule according to a criterion stipulated by a protocol and a target parameter.

The criterion stipulated by the protocol includes an association relationship between the first mapping rule and the target parameter.

The target parameter includes at least one of the following:
a symplectic fast Fourier transform dimension;
an inverse symplectic fast Fourier transform dimension;
a fast Fourier transform dimension;
an inverse fast Fourier transform dimension;
a parameter of orthogonal time frequency space (OTFS);
the quantity of resource grids of a Doppler domain;
the quantity of resource grids of a delay domain; and
the quantity of resource grids of a delay Doppler domain.

The apparatus can map the output data of the inverse symplectic fast Fourier transform on the first resource grid onto the second resource grid according to the first mapping rule to serve as the input data of the inverse fast Fourier transform, zero padding is further performed on the position of the second resource grid to which no data is mapped, and thus resource mapping may be performed based on the first mapping rule in a case that a dimension of ISFFT and a dimension of IFFT are not equivalent.

The apparatus for processing data sending in this embodiment of this application may be an apparatus, or may also be a component, an integrated circuit or a chip in a terminal. The apparatus may be a mobile electronic device or may be a non-mobile electronic device. For example, the mobile electronic device may be a mobile phone, a tablet computer, a notebook computer, a palm computer, a vehicle-mounted electronic device, a wearable device, a UMPC, a netbook, or a PDA; and the non-mobile electronic device may be a server, a network attached storage (Network Attached Storage, NAS), a personal computer (Personal Computer, PC), a television (television, TV), a teller machine, a self-service machine or the like, which is not specifically limited in this embodiment of this application.

The apparatus for processing data sending in this embodiment of this application may be an apparatus with an operating system. The operating system may be an Android (Android) operating system, may be an ios operating system, or may be another possible operating system, which is not specifically limited in this embodiment of this application.

The apparatus for processing data sending provided by this embodiment of this application can implement all processes implemented by the sending-end device in the method embodiment in FIG. 2 to FIG. 13, and details of which are omitted here to avoid repetition.

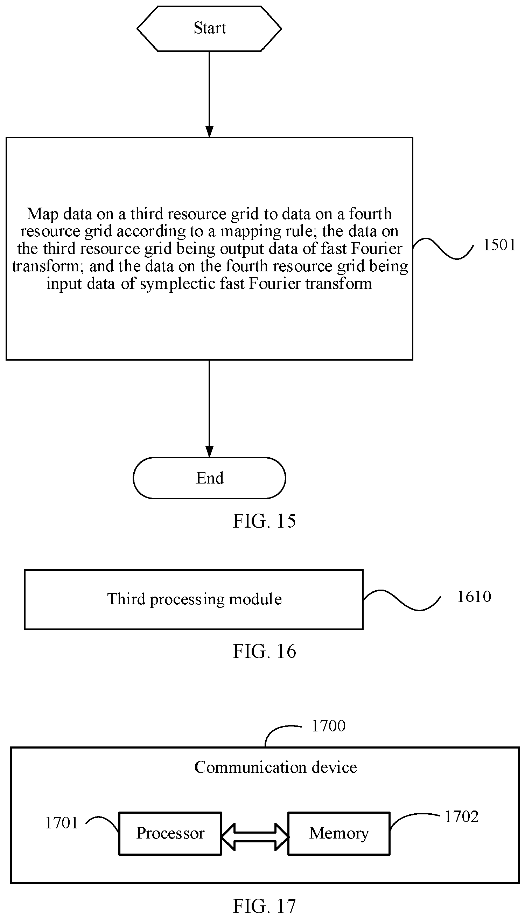

As shown in FIG. 15, an embodiment of this application further provides a method for processing data receiving, including:

Step 1501: data on a third resource grid is mapped to data on a fourth resource grid according to a second mapping rule;
the data on the third resource grid being output data of fast Fourier transform; and
the data on the fourth resource grid being input data of symplectic fast Fourier transform.

Here, the second mapping rule is an inverse mapping rule of the first mapping rule in data sending processing, so a receiving-end device of data, after receiving a signal, can map the data obtained after FFT to the input data of SFFT, and resource mapping may be performed based on the first mapping rule in a case that a dimension of SFFT and a dimension of FFT is not equivalent.

Optionally, the third resource grid is a time-frequency domain resource grid.

A time dimension of the time-frequency domain resource grid is N, and a frequency dimension thereof is L.

The fourth resource grid is a grid obtained by performing inverse symplectic fast Fourier transform on a resource grid of a delay Doppler domain.

A Doppler dimension of the resource grid of the delay Doppler domain is N, and a delay dimension thereof is M.

N, M and L are integers greater than or equal to 1, and L is greater than or equal to M.

Optionally, mapping the data on the third resource grid to the data on the fourth resource grid includes:
the data on the third resource grid is mapped to the data on the fourth resource grid in a mode of global mapping or collage mapping in a case that L is greater than M.

Optionally, the global mapping includes:
mapping data of a fifth area in the third resource grid to the data on the fourth resource grid in a mode of global mapping;
the fifth area being a part of grids in the third resource grid indicated by the second mapping rule.

Optionally, the collage mapping includes:
collaging data of K sixth areas in the third resource grid into M columns of data and then mapping the M columns of data to the data on the fourth resource grid in a mode of global mapping;
the sixth area being a part of grids in the third resource grid indicated by the second mapping rule; and K being greater than or equal to 2.

Optionally, the method further includes:
the receiving-end device determines the second mapping rule according to which the data on the third resource grid is mapped to the data on the fourth resource grid, which includes:
the receiving-end device autonomously determines the second mapping rule if the receiving-end device is a network device; where autonomous determining may be to autonomously determine the second mapping rule according to a transmission environment (such as a signal to noise ratio and a multi-path environment), a state (such as a moving speed and a moving direction) of a sending-end device and the receiving-end device, and the like; and
the receiving-end device determines the second mapping rule by receiving signaling sent by the network device if the receiving-end device is a terminal device.

Optionally, the method further includes:
the receiving-end device determines the second mapping rule according to which the data on the third resource grid is mapped to the data on the fourth resource grid, which includes:
the receiving-end device determines the mapping rule according to a criterion stipulated by a protocol and a target parameter.

The criterion stipulated by the protocol includes an association relationship between the mapping rule and the target parameter.

The target parameter includes at least one of the following:
a symplectic fast Fourier transform dimension;
an inverse symplectic fast Fourier transform dimension;
a fast Fourier transform dimension;
an inverse fast Fourier transform dimension;
a parameter of orthogonal time frequency space (OTFS);
the quantity of resource grids of a Doppler domain;
the quantity of resource grids of a delay domain; and
the quantity of resource grids of a delay Doppler domain.

Optionally, mapping the data on the third resource grid to the data on the fourth resource grid includes:
the data on the third resource grid is equal to the data on the fourth resource grid in a case that L is equal to M.

It needs to be noted that: The method is implemented in cooperation with the above method for processing data sending, and an implementation mode of the above method embodiment is applicable to this method, which can also achieve the same technical effects.

An executive body of the method for processing data receiving provided by this embodiment of this application may be an apparatus for processing data receiving, or a control module which is in the apparatus for processing data receiving and is used for executing and loading the method for processing data receiving. In this embodiment of this application, taking the apparatus for processing data receiving executing and loading the method for processing data receiving as an example, the method for processing data receiving provided by this embodiment of this application is described.

As shown in FIG. 16, an apparatus for processing data receiving in an embodiment of this application includes:
a third processing module 1610, configured to map data on a third resource grid to data on a fourth resource grid according to a second mapping rule;
the data on the third resource grid being output data of fast Fourier transform; and
the data on the fourth resource grid being input data of symplectic fast Fourier transform.

Optionally, the third resource grid is a time-frequency domain resource grid.

A time dimension of the time-frequency domain resource grid is N, and a frequency dimension thereof is L.

The fourth resource grid is a grid obtained by performing inverse symplectic fast Fourier transform on a resource grid of a delay Doppler domain.

A Doppler dimension of the resource grid of the delay Doppler domain is N, and a delay dimension thereof is M.

N, M and L are integers greater than or equal to 1, and L is greater than or equal to M.

Optionally, the third processing module includes:
a third processing sub-module, configured to map the data on the third resource grid to the data on the fourth resource grid in a mode of global mapping or collage mapping in a case that L is greater than M.

Optionally, the global mapping includes:
mapping data of a fifth area in the third resource grid to the data on the fourth resource grid in a mode of global mapping;
the fifth area being a part of grids in the third resource grid indicated by the second mapping rule.

Optionally, the collage mapping includes:
collaging data of K sixth areas in the third resource grid into M columns of data and then mapping the M columns of data to the data on the fourth resource grid in a mode of global mapping;
the sixth area being a part of grids in the third resource grid indicated by the second mapping rule; and K being greater than or equal to 2.

Optionally, the apparatus further includes:
a third determining module, configured to determine the second mapping rule according to which the data on the third resource grid is mapped to the data on the fourth resource grid, which includes:
the receiving-end device autonomously determines the second mapping rule if the receiving-end device is a network device; where
the receiving-end device determines the second mapping rule by receiving signaling sent by the network device if the receiving-end device is a terminal device.

Optionally, the apparatus further includes:
a fourth determining module, configured to determine the second mapping rule according to which the data on the third resource grid is mapped to the data on the fourth resource grid, which includes:

the receiving-end device determines the second mapping rule according to a criterion stipulated by a protocol and a target parameter.

The criterion stipulated by the protocol includes an association relationship between the second mapping rule and the target parameter.

The target parameter includes at least one of the following:
a symplectic fast Fourier transform dimension;
an inverse symplectic fast Fourier transform dimension;
a fast Fourier transform dimension;
an inverse fast Fourier transform dimension;
a parameter of orthogonal time frequency space (OTFS);
the quantity of resource grids of a Doppler domain;
the quantity of resource grids of a delay domain; and
the quantity of resource grids of a delay Doppler domain.

Optionally, the third processing module includes:
a fourth processing sub-module, configured to make the data on the third resource grid equal to the data on the fourth resource grid in a case that L is equal to M.

Here, the second mapping rule is an inverse mapping rule of the first mapping rule in data sending processing, so the apparatus, after receiving a signal, can map the data obtained after FFT to the input data of SFFT, and a problem of resource mapping when a dimension of SFFT and a dimension of FFT are not equivalent is solved.

The apparatus for processing data receiving in this embodiment of this application may be an apparatus, or may also be a component, an integrated circuit or a chip in a terminal. The apparatus may be a mobile electronic device or may be a non-mobile electronic device. For example, the mobile electronic device may be a mobile phone, a tablet computer, a notebook computer, a palm computer, a vehicle-mounted electronic device, a wearable device, a UMPC, a netbook, or a PDA; and the non-mobile electronic device may be a server, a network attached storage (Network Attached Storage, NAS), a personal computer (Personal Computer, PC), a television (television, TV), a teller machine, a self-service machine or the like, which is not specifically limited in this embodiment of this application.

The apparatus for processing data receiving in this embodiment of this application may be an apparatus with an operating system. The operating system may be an Android (Android) operating system, may be an ios operating system, or may be another possible operating system, which is not specifically limited in this embodiment of this application.

The apparatus for processing data receiving provided by this embodiment of this application can implement various processes implemented by the receiving-end device in the method embodiment in FIG. 15. To avoid repetition, details are not described herein again.

Optionally, as shown in FIG. 17, an embodiment of this application further provides a communication device, including a processor 1701, a memory 1702 and a program or an instruction stored in the memory 1702 and executable on the processor 1701, for example, when the communication device 1700 is a sending-end device, when the program or the instruction is executed by the processor 1701, various processes in the foregoing embodiment of the method for processing data sending are implemented, and the same technical effects can be achieved. When the communication device 1700 is a receiving-end device, when the program or the instruction is executed by the processor 1701, various processes in the foregoing embodiment of the method for processing data receiving are implemented, the same technical effects can be achieved, and details are omitted here to avoid repetition.

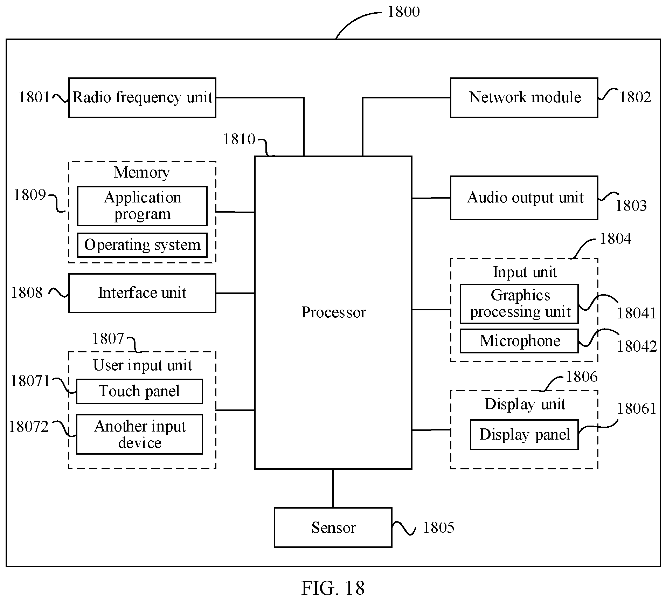

FIG. 18 is a schematic diagram of a hardware structure of a terminal for implementing various embodiments of this application.

The terminal 1800 includes but is not limited to: components such as a radio frequency unit 1801, a network module 1802, an audio output unit 1803, an input unit 1804, a sensor 1805, a display unit 1806, a user input unit 1807, an interface unit 1808, a memory 1809 and a processor 1810.

A person of skill in the art may understand that the terminal 1800 may further include a power supply (such as a battery) for supplying power to the components. The power supply may be logically connected to the processor 1810 by a power management system, thereby implementing functions such as charging, discharging, and power consumption management by using the power management system. A terminal structure shown in FIG. 18 does not constitute a limitation on the terminal, and the terminal may include more or fewer components than shown, or combine some components, or be provided with different component arrangements, which is not described in detail here.

It is to be understood that in this embodiment of this application, the input unit 1804 may include a graphics processing unit (Graphics Processing Unit, GPU) 18041 and a microphone 18042. The graphics processing unit 18041 performs processing on image data of a static picture or a video that is obtained by an image acquisition device (for example, a camera) in a video acquisition mode or an image acquisition mode. The display unit 1806 may include a display panel 18061. The display panel 18061 may be configured in the form of a liquid crystal display, an organic light-emitting diode, or the like. The user input unit 1807 includes a touch panel 18071 and another input device 18072. The touch panel 18071 is also called a touch screen. The touch panel 18071 may include two parts: a touch detection apparatus and a touch controller. The another input device 18072 may include, but is not limited to, a physical keyboard, a functional key (such as volume control keys or a switch key), a track ball, a mouse, and a joystick, which is not described herein in detail.

In this embodiment of this application, after downlink data from a network-side device is received by the radio frequency unit 1801, the downlink data is sent to the processor 1810 for processing. In addition, uplink data is sent to the network-side device. Generally, the radio frequency unit 1801 includes, but is not limited to, an antenna, at least one amplifier, a transceiver, a coupler, a low noise amplifier, a duplexer, and the like.

The memory 1809 may be configured to store a software program or instruction and various data. The memory 1809 may mainly include a program or instruction storage area and a data storage area. The program or instruction storage area may store an operating system, an application program or instruction required by at least one function (such as a sound play function and an image play function), and the like. Besides, the memory 1809 may include a high speed random access memory and may also include a non-volatile memory. The non-volatile memory may be a read-only memory (Read-Only Memory, ROM), a programmable ROM (Programmable ROM, PROM), an erasable programmable read-only memory (Erasable PROM, EPROM), an electrically EPROM (Electrically EPROM, EEPROM), or a flash memory. For example, the memory is at least one magnetic disk storage device, a flash memory device or another non-volatile solid-state storage device.

The processor 1810 may include one or more processing units. Optionally, the processor 1810 may integrate an application processor and a modem processor, where the application processor mainly processes an operating system, a user interface, an application program or instruction, and the like, and the modem processor mainly processes wireless communication, such as a baseband processor. It can be understood that the foregoing modem processor may not be integrated into the processor 1810.

The processor 1810 is configured to map data on a first resource grid to data on a second resource grid according to a first mapping rule; and
perform zero padding on a position of the second resource grid to which no data is mapped;
the data on the first resource grid being output data of inverse symplectic fast Fourier transform;
the data on the second resource grid being input data of inverse fast Fourier transform; and
the first mapping rule including a global mapping or a split mapping or an interval mapping.

The terminal can map the output data of the inverse symplectic fast Fourier transform on the first resource grid onto the second resource grid according to the first mapping rule to serve as the input data of the inverse fast Fourier transform, zero padding is further performed on the position of the second resource grid to which no data is mapped, and thus resource mapping may be performed based on the first mapping rule in a case that a dimension of ISFFT and a dimension of IFFT are not equivalent.

Besides, the terminal of this embodiment may also serve as a receiving-end device and execute:
mapping data on a third resource grid to data on a fourth resource grid according to a second mapping rule;
the data on the third resource grid being output data of fast Fourier transform; and
the data on the fourth resource grid being input data of symplectic fast Fourier transform.

Here, the second mapping rule is an inverse mapping rule of the first mapping rule in data sending processing, so the receiving-end device of the data, after receiving a signal, can map the data obtained after FFT to the input data of SFFT, and resource mapping may be performed based on the second mapping rule in a case that a dimension of SFFT and a dimension of FFT are not equivalent.

An embodiment of this application further provides a readable storage medium, storing a program or an instruction, where when the program or the instruction is executed by a processor, various processes of the foregoing embodiment of the method for processing data sending or the method for processing data receiving are implemented, and the same technical effects can be achieved, which is not described in detail herein to avoid repetition.

The processor is a processor in the electronic device in the above embodiment. The readable storage medium includes a computer-readable storage medium, for example, a read-only memory (Read-Only Memory, ROM), a random access memory (Random Access Memory, RAM), a magnetic disk, an optical disc or the like.

An embodiment of this application further provides a chip, including a processor and a communication interface, the communication interface being coupled to the processor, and the processor being configured to execute a program or an instruction to implement various processes in the foregoing embodiment of the method for processing data sending or the method for processing data receiving, and the same technical effects can be achieved, which is not described in detail here to avoid repetition.

It is to be understood that the chip mentioned in this embodiment of this application may also be called a system-on-a-chip and the like.

It needs to be noted that: the terms "include", "comprise", or any other variation thereof herein is intended to cover a non-exclusive inclusion, so that a process, a method, an article or an apparatus including a series of elements includes not only those elements, but also other elements not listed clearly, or also includes elements inherent to this process, this method, this article or this apparatus. Without more limitations, elements defined by the sentence "including one..." does not exclude that there are still other same elements in the process, method, article, or apparatus including the elements. Besides, it needs to be noted that the scope of the methods and the apparatuses in implementations of this application is not limited to executing functions according to a shown or discussed sequence, it may also include that functions are executed in a basically simultaneous mode or in an opposite sequence according to the involved functions, for example, the described methods may be executed in an order different from the described one, and various steps may also be added, omitted, or combined. In addition, features described with reference to some examples may be combined in other examples.

According to the descriptions in the foregoing implementations, a person of skill in the art may clearly learn that the methods according to the foregoing embodiments may be implemented by relying on software and a necessary general-purpose hardware platform or by using hardware, but in many cases, the former one is the better implementation. Based on such an understanding, the technical solutions of this application essentially, or the part contributing to the prior art, may be presented in the form of a software product. The computer software product is stored in a storage medium (for example, an ROM/RAM, a magnetic disk, or an optical disc) including several instructions to enable a terminal (may be a mobile phone, a computer, a server, an air-conditioner, a network device, or the like) to perform the methods described in the embodiments of this application.

The embodiments of this application have been described above with reference to the accompanying drawings. This application is not limited to the specific implementations described above, and the specific implementations described above are merely exemplary and not limitative. Those of ordinary skill in the art may also make various variations under the teaching of this application without departing from the spirit of this application and the protection scope of the claims, and such variations shall all fall within the protection of this application.

## Claims

1. A method for processing data sending, comprising:
mapping data on a first resource grid to data on a second resource grid according to a first mapping rule; and
performing zero padding on a position of the second resource grid to which no data is mapped;
the data on the first resource grid being output data of inverse symplectic fast Fourier transform;
the data on the second resource grid being input data of inverse fast Fourier transform; and
the first mapping rule comprising a global mapping or a split mapping or an interval mapping.

2. The method according to claim 1, wherein the first resource grid is a grid obtained by performing inverse symplectic fast Fourier transform on a resource grid of a delay Doppler domain;
a Doppler dimension of the resource grid of the delay Doppler domain is N, and a delay dimension thereof is M;
the second resource grid is a time-frequency domain resource grid;
a time dimension of the time-frequency domain resource grid is N, and a frequency dimension thereof is L; and
N, M and L are integers greater than or equal to 1, and L is greater than or equal to M.

3. The method according to claim 2, wherein mapping the data on the first resource grid to the data on the second resource grid comprises:
mapping the data on the first resource grid to the data on the second resource grid in a mode of global mapping or split mapping or interval mapping according to a position of a direct current subcarrier on a frequency dimension of the second resource grid in a case that L is greater than M.

4. The method according to claim 3, wherein the global mapping comprises:
mapping the first resource grid to a first area in a mode of global mapping in a case that quantity of grids on a frequency dimension of the first area is greater than or equal to M;
the first area being obtained by dividing the second resource grid based on a position of the direct current subcarrier on the frequency dimension of the second resource grid.

5. The method according to claim 3, wherein the split mapping comprises:
splitting the data on the first resource grid into K parts and mapping the K parts to a plurality of second areas respectively in a case that quantity of grids on a frequency dimension of each second area is smaller than M;
K being greater than or equal to 2; and
the second areas being obtained by dividing the second resource grid based on the position of the direct current subcarrier on the frequency dimension of the second resource grid.

6. The method according to claim 3, wherein the interval mapping comprises:
determining a start position of the interval mapping on the frequency dimension of the second resource grid based on a mapping interval and the position of the direct current subcarrier on the frequency dimension of the second resource grid; and
mapping the data on the first resource grid to the data on the second resource grid at equal intervals from the start position.

7. The method according to claim 6, wherein determining the start position of the interval mapping on the frequency dimension of the second resource grid based on the mapping interval and the position of the direct current subcarrier on the frequency dimension of the second resource grid comprises:
using a position corresponding to a non-k index on the frequency dimension of the second resource grid as the start position in a case that quantity of the direct current subcarrier is 1; wherein
k=mod (P_{DC}, S), S is the mapping interval, P_{DC} is an index corresponding to the position of the direct current subcarrier on the frequency dimension of the second resource grid, and mod() is a remainder function.

8. The method according to claim 6, wherein determining the start position of the interval mapping on the frequency dimension of the second resource grid based on the mapping interval and the position of the direct current subcarrier on the frequency dimension of the second resource grid comprises:
using a position corresponding to a non-n index on the frequency dimension of the second resource grid as the start position in a case that quantity of direct current subcarriers is 2, and mod (P_{DC1}, S)= mod (P_{DC2}, S); wherein
n=mod (P_{DC1}, S), S is the mapping interval, P_{DC1} is an index corresponding to a position of a first direct current subcarrier on the frequency dimension of the second resource grid, P_{DC2} is an index corresponding to a position of a second direct current subcarrier on the frequency dimension of the second resource grid, and mod() is a remainder function.

9. The method according to claim 6, wherein determining the start position of the interval mapping on the frequency dimension of the second resource grid based on the mapping interval and the position of the direct current subcarrier on the frequency dimension of the second resource grid comprises:
determining a first start position in a third area and a second start position in a fourth area in a case that quantity of direct current subcarriers is 2, and mod (P_{DC1}, S) and mod (P_{DC2}, S) are unequal; wherein
the first start position is a position corresponding to a non-x index on the frequency dimension of the second resource grid; x=mod (P_{DC1}, S), S is the mapping interval, P_{DC1} is an index corresponding to the position of a first direct current subcarrier on the frequency dimension of the second resource grid, and mod() is a remainder function;
the second start position is a position corresponding to an index meeting a preset condition on the frequency dimension of the second resource grid, and the preset condition comprises: that the index is greater than or equal to P_{DC1}, and mod (index, S)≠y, wherein y=mod (P_{DC2}, S), P_{DC2} is an index corresponding to a position of a second direct current subcarrier on the frequency dimension of the second resource grid, and mod() is the remainder function;
the third area is an area with an index being smaller than P_{DC1} on the frequency dimension in the second resource grid; and
the fourth area is an area with an index being greater than P_{DC1} on the frequency dimension in the second resource grid.

10. The method according to claim 2, wherein mapping the data on the first resource grid to the data on the second resource grid comprises:
making the data on the second resource grid equal to the data on the first resource grid in a case that L is equal to M.

11. The method according to claim 1, further comprising:
determining, by a sending-end device, the first mapping rule according to which the data on the first resource grid is mapped to the data on the second resource grid, which comprises:
autonomously determining, by the sending-end device, the first mapping rule if the sending-end device is a network device; and
determining, by the sending-end device, the first mapping rule by receiving signaling sent by the network device if the sending-end device is a terminal device.

12. The method according to claim 1, further comprising:
determining, by a sending-end device, the first mapping rule according to which the data on the first resource grid is mapped to the data on the second resource grid, which comprises:
determining, by the sending-end device, the first mapping rule according to a criterion stipulated by a protocol and a target parameter; wherein
the criterion stipulated by the protocol comprises an association relationship between the first mapping rule and the target parameter; and
the target parameter comprises at least one of the following:
a symplectic fast Fourier transform dimension;
an inverse symplectic fast Fourier transform dimension;
a fast Fourier transform dimension;
an inverse fast Fourier transform dimension;
a parameter of orthogonal time frequency space (OTFS);
quantity of resource grids of a Doppler domain;
quantity of resource grids of a delay domain; and
quantity of resource grids of a delay Doppler domain.

13. A method for processing data receiving, comprising:
mapping data on a third resource grid to data on a fourth resource grid according to a second mapping rule;
the data on the third resource grid being output data of fast Fourier transform; and
the data on the fourth resource grid being input data of symplectic fast Fourier transform.

14. The method according to claim 13, wherein the third resource grid is a time-frequency domain resource grid;
a time dimension of the time-frequency domain resource grid is N, and a frequency dimension thereof is L; and
the fourth resource grid is a grid obtained by performing inverse symplectic fast Fourier transform on a resource grid of a delay Doppler domain.
a Doppler dimension of the resource grid of the delay Doppler domain is N, and a delay dimension thereof is M; and
N, M and L are integers greater than or equal to 1, and L is greater than or equal to M.

15. The method according to claim 14, wherein mapping the data on the third resource grid to the data on the fourth resource grid comprises:
mapping the data on the third resource grid to the data on the fourth resource grid in a mode of global mapping or collage mapping in a case that L is greater than M.

16. The method according to claim 15, wherein the global mapping comprises:
mapping data of a fifth area in the third resource grid to the data on the fourth resource grid in a mode of global mapping;
the fifth area being a part of grids in the third resource grid indicated by the second mapping rule.

17. The method according to claim 15, wherein the collage mapping comprises:
collaging data of K sixth areas in the third resource grid into M columns of data and then mapping the M columns of data to the data on the fourth resource grid in a mode of global mapping;
the sixth area being a part of grids in the third resource grid indicated by the second mapping rule; and
K being greater than or equal to 2.

18. The method according to claim 13, wherein further comprising:
determining, by a receiving-end device, the second mapping rule according to which the data on the third resource grid is mapped to the data on the fourth resource grid, which comprises:
autonomously determining, by the receiving-end device, the second mapping rule if the receiving-end device is a network device; and
determining, by the receiving-end device, the second mapping rule by receiving signaling sent by the network device if the receiving-end device is a terminal device.

19. The method according to claim 13, wherein further comprising:
determining, by a receiving-end device, the second mapping rule according to which the data on the third resource grid is mapped to the data on the fourth resource grid, which comprises:
determining, by the receiving-end device, the second mapping rule according to a criterion stipulated by a protocol and a target parameter; wherein
the criterion stipulated by the protocol comprises an association relationship between the second mapping rule and the target parameter; and
the target parameter comprises at least one of the following:
a symplectic fast Fourier transform dimension;
an inverse symplectic fast Fourier transform dimension;
a fast Fourier transform dimension;
an inverse fast Fourier transform dimension;
a parameter of orthogonal time frequency space (OTFS);
quantity of resource grids of a Doppler domain;
quantity of resource grids of a delay domain; and
quantity of resource grids of a delay Doppler domain.

20. The method according to claim 14, wherein mapping the data on the third resource grid to the data on the fourth resource grid comprises:
making the data on the third resource grid equal to the data on the fourth resource grid in a case that L is equal to M.

21. An apparatus for processing data sending, comprising:
a first processing module, configured to map data on a first resource grid to data on a second resource grid according to a first mapping rule; and
a second processing module, configured to perform zero padding on a position of the second resource grid to which no data is mapped;
the data on the first resource grid being output data of inverse symplectic fast Fourier transform;
the data on the second resource grid being input data of inverse fast Fourier transform; and
the first mapping rule comprising a global mapping or a split mapping or an interval mapping.

22. The apparatus according to claim 21, wherein the first resource grid is a grid obtained by performing inverse symplectic fast Fourier transform on a resource grid of a delay Doppler domain;
a Doppler dimension of the resource grid of the delay Doppler domain is N, and a delay dimension thereof is M; and
the second resource grid is a time-frequency domain resource grid;
a time dimension of the time-frequency domain resource grid is N, and a frequency dimension thereof is L; and
N, M and L are integers greater than or equal to 1, and L is greater than or equal to M.

23. The apparatus according to claim 22, wherein the first processing module comprises:
a first processing sub-module, configured to map the data on the first resource grid to the data on the second resource grid in a mode of global mapping or split mapping or interval mapping according to a position of a direct current subcarrier on a frequency dimension of the second resource grid in a case that L is greater than M.

24. The apparatus according to claim 22, wherein the first processing module comprises:
a second processing sub-module, configured to make the data on the second resource grid equal to the data on the first resource grid in a case that L is equal to M.

25. A apparatus for processing data receiving, comprising:
a third processing module, configured to map data on a third resource grid to data on a fourth resource grid according to a second mapping rule;
the data on the third resource grid being output data of fast Fourier transform; and
the data on the fourth resource grid being input data of symplectic fast Fourier transform.

26. The apparatus according to claim 25, wherein the third resource grid is a time-frequency domain resource grid;
a time dimension of the time-frequency domain resource grid is N, and a frequency dimension thereof is L; and
the fourth resource grid is a grid obtained by performing inverse symplectic fast Fourier transform on a resource grid of a delay Doppler domain.
a Doppler dimension of the resource grid of the delay Doppler domain is N, and a delay dimension thereof is M; and
N, M and L are integers greater than or equal to 1, and L is greater than or equal to M.

27. The apparatus according to claim 26, wherein the third processing module comprises:
a third processing sub-module, configured to map the data on the third resource grid to the data on the fourth resource grid in a mode of global mapping or collage mapping in a case that L is greater than M.

28. The apparatus according to claim 26, wherein the third processing module comprises:
a fourth processing sub-module, configured to make the data on the third resource grid equal to the data on the fourth resource grid in a case that L is equal to M.

29. A communication device, comprising a processor, a memory and a program or an instruction stored in the memory and executable on the processor, wherein when the program or the instruction is executed by the processor, the steps of the method for processing data sending according to any one of claims 1 to 12 or the steps of the method for processing data receiving according to any one of claims 13 to 20 are implemented.

30. A readable storage medium, storing a program or an instruction, wherein when the program or the instruction is executed by a processor, the steps of the method for processing data sending according to any one of claims 1 to 12 or the steps of the method for processing data receiving according to any one of claims 13 to 20 are implemented.

31. A chip, comprising a processor and a communication interface, the communication interface being coupled to the processor, and the processor being configured to execute a program or an instruction to implement the method for processing data sending according to any one of claims 1 to 12 or the method for processing data receiving according to any one of claims 13 to 20.

32. A computer program product, executed by at least one processor to implement the method for processing data sending according to any one of claims 1 to 12 or the method for processing data receiving according to any one of claims 13 to 20.

33. A communication device, configured to execute the method for processing data sending according to any one of claims 1 to 12 or the method for processing data receiving according to any one of claims 13 to 20.
